Europäisches Patentamt

European Patent Office

Office européen des brevets

(11) Veröffentlichungsnummer: **0 158 856**
**A2**

## (12) EUROPÄISCHE PATENTANMELDUNG

(21) Anmeldenummer: **85103334.0**

(22) Anmeldetag: **21.03.85**

(51) Int. Cl.⁴: **G 01 N 29/04**

(30) Priorität: **06.04.84 DE 3413097**

(43) Veröffentlichungstag der Anmeldung:
**23.10.85** Patentblatt **85/43**

(84) Benannte Vertragsstaaten:
**CH DE GB LI NL SE**

(71) Anmelder: **KRAFTWERK UNION**
**AKTIENGESELLSCHAFT**
**Wiesenstrasse 35**
**D-4330 Mülheim (Ruhr)(DE)**

(72) Erfinder: **Heumüller, Roland, Dr. Dipl.-Phys.**
**Meisenweg 50**
**D-8520 Erlangen(DE)**

(74) Vertreter: **Mehl, Ernst, Dipl.-Ing. et al,**
**Postfach 22 01 76**
**D-8000 München 22(DE)**

(54) **Verfahren zur Ultraschallprüfung ferritischer Bauteile mit einer Plattierung.**

(57) Bei einem Verfahren zur Ultraschallprüfung ferritischer Bauteile mit einer Plattierung unter Verwendung eines Ultraschallsenders, der auf der der Plattierung abgekehrten Seite des Bauteiles einstrahlt, und eines Empfängers für Reflexionssignale, die von einem Fehler ausgehen, werden Longitudinalwellen unter einem Winkel zwischen 70 und 86° gegenüber der Plattierungsfläche in das Bauteil eingestrahlt, deren Reflexionssignal zwischen dem Sender und dem Fehler ermittelt werden. Damit werden gerade in der plattierungsnahen Zone Fehler mit großer Wahrscheinlichkeit und hohem Rauschabstand ermittelt.

FIG 1

KRAFTWERK UNION AKTIENGESELLSCHAFT    Unser Zeichen
VPA 84 P 6 0 2 6 E

Verfahren zur Ultraschallprüfung ferritischer
Bauteile mit einer Plattierung

Die Erfindung betrifft ein Verfahren zur Ultraschallprüfung ferritischer Bauteile mit einer Plattierung
unter Verwendung eines Ultraschallsenders, der auf der
der Plattierung abgekehrten Seite des Bauteiles unter
einem Winkel zur Plattierungsfläche in das Bauteil einstrahlt, und eines Empfängers für Reflexionssignale,
die von einem Fehler ausgehen.

Bei den bisherigen Verfahren war die Empfindlichkeit
der Prüfung und damit die Wahrscheinlichkeit des Auffindens von Fehlern in der plattierungsnahen Zone
durch Rauschen beeinträchtigt, das von der Plattierung
ausging. Andererseits ist es wesentlich bei Fertigungs-
und wiederkehrenden Prüfungen im plattierungsnahen Bereich genau zu messen, damit auch kleine Anrisse sicher
erfaßt werden. Für dieses Problem sucht die Erfindung
eine Lösung.

Gemäß der Erfindung wird das Verfahren der eingangs
genannten Art so ausgeführt, daß unter einem Winkel
zwischen 70 und 86° Longitudinalwellen eingestrahlt werden.

Erstaunlicherweise hat sich gezeigt, daß bei dem Verfahren nach der Erfindung deswegen genaue und bisher
unerreichte Messungen möglich sind, weil die Longitudinalwelle an der Plattierungsebene eine parallel zum
Interface verlaufende Welle auslöst. Diese Welle, die
bisher offenbar noch nie festgestellt worden ist, ist

Sm 2 Hgr / 03.04.1984

nur minimal empfindlich für gefügebedingte Rückstreuungen, so daß sich ein entsprechend großer Abstand des Signals zum Rauschen ergibt. Außerdem trifft diese Welle praktisch senkrecht auf die in der Plattierungsebene liegende Unterplattierungsrisse, so daß solche Fehler auch bei kleinen Abmessungen empfindlich ermittelt werden. Der nutzbare Bereich dieser Welle beträgt mindestens 400 mm, sofern die mit der Plattierung versehene Bauteiloberfläche gerade verläuft. Man kann deshalb mit der Erfindung die Fehlerfreiheit von Bauteilen mit viel weniger Prüfkopfbewegungen als bisher nachweisen.

Die Empfindlichkeit kann bei dem Verfahren nach der Erfindung noch dadurch vergrößert werden, daß der Ultraschallstrahl unter Berücksichtigung des Winkels auf die Plattierung fokussiert wird. Die Fokussierung kann mit bekannten Mitteln erreicht werden, und zwar sowohl für einen Einschwinger-Prüfkopf als auch einen Sende-Empfänger-Prüfkopf.

Der für den Ultraschallstrahl vorgesehene Empfänger kann, soweit er nicht mit dem Sender identisch ist, bis auf einen Abstand vom Fehler verwendet werden, der das 0,7-fache der Dicke des Bauteils beträgt. Der Mindestabstand des Senders ergibt sich winkelabhängig als Abstand für die direkte Anschallung des Fehlers. Mit Dicke des Bauteiles ist dabei der senkrechte Abstand zwischen der Plattierungsebene und der dieser gegenüberliegenden Oberfläche des Bauteiles gemeint.

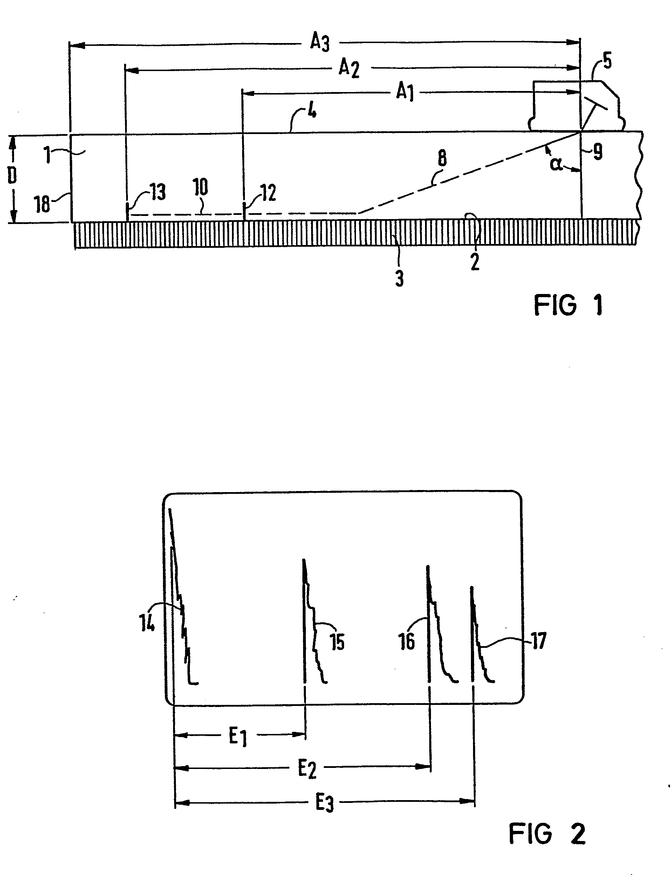

Zur näheren Erläuterung der Erfindung wird anhand der beiliegenden Zeichnung ein Ausführungsbeispiel beschrieben. Dabei zeigt die Fig. 1 einen Schnitt durch einen ebenen Prüfkörper 1 aus ferritischem Material, der auf seiner Unterseite 2 mit einer Plattierung 3 versehen ist. Auf die der Plattierung 3 gegenüberliegenden Oberfläche 4 ist ein Prüfkopf 5 aufgesetzt. Der Prüfkopf 5 kann ein Einschwinger-Prüfkopf sein oder ein Sende-Empfänger-Prüfkopf, der in bekannter Weise einen Ultraschallstrahl erzeugt. Der Ultraschallstrahl ist in der Fig. 1 mit dem gestrichelt gezeichneten Hauptstrahl 8 angedeutet, der unter dem Winkel $\alpha$ gegenüber der Senkrechten 9 auf der Plattierungsebene 2 eingestrahlt wird. Der Winkel $\alpha$ liegt zwischen 70 und 80°. In diesem Bereich führt der als Longitudinalwelle eingestrahlte und auf die Plattierung 3 fokussierte Hauptstrahl 8 zu einer interfaceparallelen Welle 10. Mit dieser interfaceparallelen Welle ergibt sich eine hohe Nachweisempfindlichkeit für Fehler im plattierungsnahen Bereich. Beim Ausführungsbeispiel sind solche Fehler bei 12 und 13 angedeutet.

Die genannten Fehler 12, 13 führen auf einem dem Empfänger des Ultraschallsystems zugeordneten Bildschirm, der in Fig. 2 dargestellt ist, zu klar erkennbaren Fehlerechos. Der Fehler 12 mit einem Abstand $A_1$ vom Prüfkopf 5 erscheint auf dem Bildschirm mit einem Echo 15, dessen Verzögerung $E_1$ gegenüber dem Zeitpunkt 14 des Schalleintritts in den Stahl (= Nullpunkt des Bildschirms) proportional dem Fehlerabstand $A_1$ ist. Der zweite Fehler 13 ergibt ein Reflexionssignal 16, dessen Verzögerung $E_2$ gegenüber dem Schalleintritt bei 14 wiederum proportional dem Fehlerabstand $A_2$ ist.

In Fig. 2 ist noch ein weiteres Reflexionssignal 17 angedeutet. Dieses Signal stammt von der Rückseite 18 des Bauteils. Seine Verzögerung $E_3$ ist gleich dem Abstand $A_3$ zwischen der Rückwand 18 und dem Schallaustrittspunkt des Senders 5.

In der Fig. 1 ist die Dicke D des ferritischen Bauteils 1 mit 30 mm angenommen. Die Dicke der Plattierung beträgt zum Beispiel 5 mm. Die besondere Empfindlichkeit mit dem erfindungsgemäßen Verfahren kann dabei bis zu einem Abstand des Prüfkopfes 5 vom Fehler erwartet werden, der 0,7 mal der Dicke D des Bauteils 1 ist. Beim Ausführungsbeispiel bedeutet dies, daß ein evtl. vom Sender getrennter Empfänger-Prüfkopf mit seinem Schallaustrittspunkt bis auf 21 mm an die Fehler 12, 13 heranbewegt werden kann.

3 Patentansprüche
2 Figuren

0158856

## Patentansprüche

1. Verfahren zur Ultraschallprüfung ferritischer Bauteile mit einer Plattierung unter Verwendung eines Ultraschallsenders, der auf der der Plattierung abgekehrten Seite des Bauteiles unter einem Winkel zur Plattierungsfläche in das Bauteil einstrahlt, und eines Empfängers für Reflexionssignale, die von einem Fehler ausgehen, d a d u r c h   g e k e n n z e i c h n e t, daß unter einem Winkel zwischen 70 und 86o Longitudinalwellen eingestrahlt werden.

2. Verfahren nach Anspruch 1, d a d u r c h   g e - k e n n z e i c h n e t, daß der Ultraschallstrahl unter Berücksichtigung des Winkels auf die Plattierung fokussiert wird.

3. Verfahren nach Anspruch 1 oder 2, d a d u r c h   g e k e n n z e i c h n e t, daß ein vom Ultraschallsender getrennter Empfänger bis zu einem Abstand vom Fehler verwendet wird, der das 0,7-fache der Dicke des Bauteils beträgt.

0158856

84 P 6026

FIG 1

FIG 2